# EUROPÄISCHE PATENTSCHRIFT

(11) **EP 3 616 140 B1**
(45) Veröffentlichungstag und Bekanntmachung des Hinweises auf die Patenterteilung: **04.12.2024**
(21) Anmeldenummer: 18719158.0
(22) Anmeldetag: 20.04.2018
(51) Int. Cl.: G06Q 10/08, G06T 19/00

(54) **SYSTEM ZUR UNTERSTÜTZUNG VON TEAMARBEIT MITTELS AUGMENTED REALITY**
SYSTEM FOR SUPPORTING TEAMWORK BY AUGMENTED REALITY
SYSTÈME DE SUPPORT DE TRAVAIL D'ÉQUIPE PAR RÉALITÉ AUGMENTÉE

(30) Priorität: 23.04.2017 DE 102017108622
(43) Veröffentlichungstag der Anmeldung: 04.03.2020
(73) Patentinhaber: Goodly Innovations GmbH, 82031 Grünwald (DE)
(72) Erfinder: HOFFMEISTER, Robert, 82031 Grünwald (DE)
(74) Vertreter: Maiwald GmbH
(86) Internationale Anmeldenummer: PCT/EP2018/060150
(87) Internationale Veröffentlichungsnummer: WO 2018/197349

(56) Entgegenhaltungen:
- EP-A1- 3 076 253
- EP-A1- 3 086 193
- CN-U- 204 406 329
- US-A1- 2014 204 121
- US-A1- 2014 240 349
- US-A1- 2016 049 006
- US-A1- 2017 061 212

## Beschreibung

### TECHNISCHES GEBIET

Die vorliegende Beschreibung betrifft ein System und ein Verfahren zur dynamischen Unterstützung eines Teams von Personen beim Bedienen (z.B. zum Rüsten bzw. Umrüsten) von Maschinen mit Hilfe von *Augmented-Reality-* (AR-) Systemen.

### HINTERGRUND

*Augmented-Reality* - auch als *Mixed Reality* oder holographisches Computing bezeichnet - kann als eine Überlagerung von realer Umgebung und virtuellen Elementen verstanden werden. Eine derartige Überlagerung ist z.B. mittels eines stereoskopischen Head-up-Displays (HUD) möglich. Derartige Displays können wie eine Brille getragen werden, wobei die beiden Brillengläser als transparente Head-up-Displays dienen, welche die stereoskopische (3D-) Darstellung von Elementen im Sichtfeld des Displays ermöglichen, und werden daher auch als AR-Brillen bezeichnet. Ein kommerziell erhältliches System mit Head-up-Display und integriertem Prozessor (CPU) und Grafikprozessor (GPU) und Sensoren zur Ermittlung der Lage der AR-Brille im Raum ist z.B. die HoloLens^{®} von Microsoft. Derartige Geräte werden im Folgenden als AR-Terminals bezeichnet.

Die Verwendung von AR-Systemen in Produktion und Service ist - beispielsweise in der Automobilindustrie - an sich bekannt (siehe z.B. EP 1 295 099 B1). AR-Systeme können z.B. in der Qualitätskontrolle einen Prüfer unterstützen. Dabei kann das AR-System dem Anwender (z.B. dem Prüfer bei der Qualitätskontrolle) Informationen in sein Sichtfeld einblenden und so seine Wahrnehmung erweitern. Als Informationen können insbesondere Bild-, Video- oder Textdaten eingeblendet werden. Der Anwender hat durch die Überlagerung von virtueller und realer Umgebung die Möglichkeit, Soll-Ist-Abgleiche einfach durchzuführen.

Die Erfinder haben es sich zur Aufgabe gemacht, das Potential moderner AR-Systeme in der Produktion besser zu nutzen, beispielsweise in Situationen wo mehrere Personen gemeinsam (als Team) einen Vorgang an einer Maschine durchführen sollen und dazu die Arbeitsanweisungen dynamisch zu generieren sowie schritthaltend und dynamisch anzupassen.

US 2016/049 006 A1 offenbart ein System und ein Verfahren zur Datenerfassung im Raum und zur Erstellung von Augmented Reality-Inhalten auf der Basis eines hierbei erfassten physischen Objekts.

CN 204 406 329 U offenbart ein System, das nach dem Scan der Verpackung eines Produkts dieses Produkt in Augmented Reality anzeigt.

EP 3 086 193 A1 offenbart ein tragbares Augmented Reality-Gerät, das einem Benutzer während der Arbeit mit einem Werkzeug Zusatzinformationen in das Gesichtsfeld einblendet.

EP 3 076 253 A1 offenbart ein weiteres Augmented Reality-System, das einem Bild einer Industrieanlage oder eines Teils hiervon Zusatzinformationen aus einem Automatisierungssystem dieser Industrieanlage überlagert.

US 2014/240 349 A offenbart ein Verfahren zum Präsentieren von Teilen, die für die Durchführung einer Aufgabe benötigt werden, in einem Augmented Reality-Interface.

US 2014/204 121 A1 offenbart ein Verfahren zur Unterstützung eines Arbeiters bei Arbeiten an Ölförderungsanlagen. Gemäß dem Verfahren werden der aktuelle Ort des Arbeiters und die aktuell durchgeführte Arbeit erkannt. Dem Arbeiter werden dann passende Metadaten präsentiert.

US 2017/061 212 A1 offenbart ein System mit Detektoren, die eine Bewegung des Benutzers und eine von ihm ausgeführte Arbeit erkennen, und einem Display, das arbeitsbezogene Informationen ins Gesichtsfeld des Benutzers einblendet.

### ZUSAMMENFASSUNG

Die erwähnte Aufgabe wird durch das System gemäß Anspruch 1 sowie das Verfahren gemäß Anspruch 17 gelöst. Verschiedene Ausführungsbeispiele und Weiterentwicklungen sind Gegenstand der abhängigen Ansprüche. Die Erfindung wird durch die Ansprüche definiert. Ausführungsbeispiele und Ausgestaltungen, die nicht unter die Ansprüche fallen, werden präsentiert, um den Gegenstand der beanspruchten Erfindung zu illustrieren und sein Verständnis zu erleichtern.

Es wird ein computergestütztes System zur Unterstützung von Teamarbeit mittels *Augmented Reality* (AR) beschrieben. Gemäß einem Ausführungsbeispiel umfasst das System einen Produktionsserver, der dazu ausgebildet ist, folgendes zu speichern: die dreidimensionale Geometrie von zumindest einem Teil einer Maschine und eine Vielzahl von Aufgaben, wobei jeder Aufgabe einer Position im Raum, bei der die jeweilige Aufgabe zu erledigen ist, sowie positionsbezogene Information betreffend die Erledigung der Aufgabe zugeordnet sind. Das System umfasst weiter eine Vielzahl von Benutzer-Terminals, die über ein Computernetzwerk mit dem Produktionsserver verbunden sind, wobei jeder Benutzer-Terminal einer Person eines Teams zugeordnet ist. Der Produktionsserver ist weiter dazu ausgebildet, jeder Person des Teams eine Aufgabe zuzuweisen, wobei die der jeweiligen Aufgabe zugeordnete positionsbezogene Information auf dem Benutzer-Terminal der betreffenden Person dargestellt wird.

Des Weiteren wird ein computergestütztes Verfahren zur Unterstützung von Teamarbeit beschrieben. Gemäß einem Ausführungsbeispiel umfasst das Verfahren das Speichern folgender Daten auf einem einen Produktionsserver: die dreidimensionale Geometrie von zumindest einem Teil einer Maschine und eine Vielzahl von Aufgaben, wobei jeder Aufgabe eine Position im Raum, bei der die jeweilige Aufgabe zu erledigen ist, sowie positionsbezogene Information betreffend die Erledigung der Aufgabe zugeordnet sind. Das Verfahren umfasst weiter das Anmelden einer Vielzahl von Benutzer-Terminals, die über ein Computernetzwerk mit dem Produktionsserver verbunden sind, an dem Produktionsserver. Jeder Benutzer-Terminal ist einer Person eines Teams zugeordnet. Das Verfahren umfasst weiter das Zuweisen einer Aufgabe aus der Vielzahl von Aufgaben an jede Person des Teams, wobei die der jeweiligen Aufgabe zugeordnete positionsbezogene Information auf dem Benutzer-Terminal der betreffenden Person dargestellt wird.

In einem Ausführungsbeispiel kann der jeweilige Benutzer-Terminal die positionsbezogene Information, die der jeweiligen Aufgabe zugeordnet ist, an der der Aufgabe zugeordneten Position im Raum darstellen (z.B. mittels *Augmented-Reality* Technik). Einer Person kann auch eine Gruppe von Aufgaben (aus der Vielzahl von Aufgaben) zugewiesen werden, wobei der Benutzer-Terminal der Person die Auswahl einer Aufgabe aus der Gruppe von Aufgaben ermöglicht. Der Benutzer-Terminal der betreffenden Person kann dann die positionsbezogene Information, die einer von der Person ausgewählten Aufgabe zugeordnet ist, darstellen.

Die Zuweisung einer Aufgabe oder einer Gruppe von Aufgaben an eine Person (der ein Benutzer-Terminal zugeordnet ist) kann dynamisch erfolgen und an den jeweils vom Team durchzuführenden Prozess angepasst sein. Dabei kann die Zuweisung der Aufgaben dynamisch aktualisiert werden, wenn sich die Zahl der teilnehmenden Benutzer-Terminals ändert und die Zuweisung der Aufgaben kann von einem Skill-Level einer Person abhängen, der die Befugnisse oder Fähigkeiten der jeweiligen Person repräsentiert.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Zu den Abbildungen:
Figur 1 illustriert schematisch ein Beispiel eines Systems zur Unterstützung eines Teams von (beliebig vielen) Bedienpersonen (*Operators*) mittels vernetzter AR-Terminals.
Figur 2 ist eine exemplarische Darstellung einer Maschine mit positions- und kontextbezogener Darstellung von Information zu einem Bedien- oder Anzeigeelement der Maschine.
Figur 3 zeigt anhand einer schematischen Skizze die Unterteilung einer Produktionslinie in mehrere Anlagenmodule und mehrere Positionen, an denen Aufgaben (*Tasks*) zu erledigen sind.
Figur 4 zeigt anhand einer schematischen Skizze die Summe aller möglichen Aufgaben ( Tasks T11, T21...), die für die dynamische Generierung eines Prozesses erforderlich sind, mit der Zuordnung einzelner Aufgaben zu zugehörigen Positionen an der Produktionslinie.
Figur 5 zeigt anhand einer schematischen Skizze die Zuordnung von Aufgaben zu verschiedenen Aufgaben-Cluster.
Figur 6 ist ein Diagramm zur Illustration der automatisierten Organisation der Tätigkeit eines Teams von Bedienpersonen (*Operators*) bei der Abarbeitung von Aufgaben.
Figur 7 illustriert die anhand von drei schematischen Diagrammen (a-c) die Prozedur zur Zuweisung einer Aufgabe an einen Operator, der neu in ein Team hinzugekommen ist.
Figur 8 illustriert anhand eines schematischen Diagramms die Prozedur bei Erledigung einer bestimmten Aufgabe durch den jeweiligen Operator.
Figur 9 illustriert anhand eines schematischen Diagramms die Prozedur, wenn ein Operator das Team verlässt.

### DETAILLIERTE BESCHREIBUNG

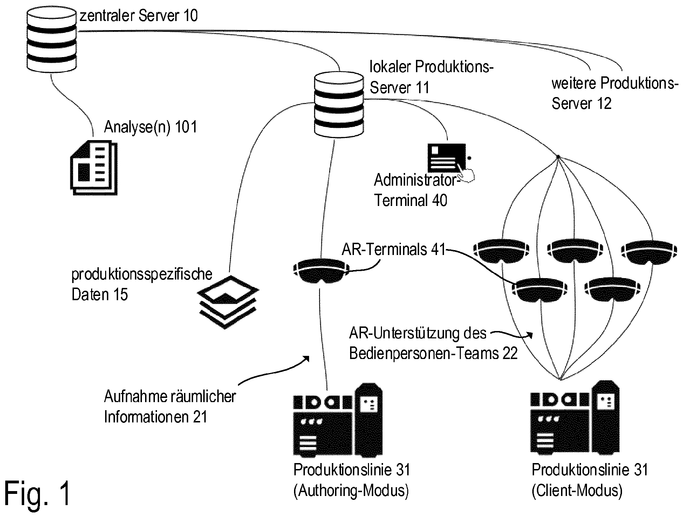

Fig. 1 zeigt schematisch ein erstes Beispiel eines Systems zur Unterstützung eines Teams von Bedienpersonen (*Operators*) bei der Bedienung von Produktionsmaschinen mittels vernetzter Endgeräte (Terminals) wie beispielsweise *Augmented-Reality-*Endgeräte (auch AR-Terminals genannt). Der von dem Team durchgeführte Prozess kann z.B. das Rüsten oder Umrüsten einer oder mehrerer Maschinen einer Produktionslinie sein. In vielen Bereichen der Industrie müssen z.B. Verpackungsmaschinen häufig umgerüstet werden, um verpackte Produkte mit unterschiedliche Packungsgrößen oder mit verschiedenen Varianten von Verpackungen herzustellen. Nur als exemplarisches Beispiel sei die automatisierte Verpackung von Arzneimittel genannt, bei denen für viele verschiedene Länder und Produkte eine Vielzahl von verschiedenen Verpackungen benötigt werden. Ein regelmäßiges Umrüsten der Verpackungsmaschinen ist notwendig und die Effizienz dieses Umrüstprozesses kann ein wichtiger Faktor sein.

Im dargestellten Beispiel kann das System in zwei Betriebsmodi betrieben werden. Der erste Betriebsmodus wird mit *Authoring-*Modus und der zweite Betriebsmodus mit *Client-*Modus bezeichnet. Das System umfasst einen oder mehrere Produktionsserver 11, 12, etc. (z.B. einen Server für jede Produktionslinie), die mit einem zentralen Server 10 in einem Computernetzwerk verbunden sein können. Bei kleineren Produktionsanlagen können die Funktionen des zentralen Servers und des Produktionsservers 11 in einem (Produktions-) Server konzentriert sein. Im vorliegenden Beispiel ist der Produktionsserver 11 der Produktionslinie 31 zugeordnet. Über das Computernetzwerk können mit dem Produktionsserver 11 eine Vielzahl von Benutzer-Terminals wie z.B. AR-Terminals 41 und (optional) ein Administrator-Terminal 40 (z.B. ein Personal-Computer, ein Tablet-PC oder ein weiteres AR-Terminal) verbunden sein, beispielsweise über ein drahtloses lokales Netzwerk (*wireless lokal area network,* WLAN). Die Produktionsserver 11, 12 müssen nicht auf einer eigenständigen (Computer-) Hardware laufen, sondern die betreffenden Server-Dienste können in auch in einem Benutzer-Terminal (z.B. einem AR-Terminal oder einem anderen mobilen Gerät) oder dem Administrator-Terminal 40 ausgeführt werden.

AR-Terminals können stereoskopische Head-up-Displays (HUDs oder HMDs, *head-mounted displays*) mit und ohne Sensorik zur räumlichen Detektion der Umgebung sein. Kommerziell verfügbare Systeme sind z.B. Google Glass^{®,}, Epson Moverio^{®} (ohne Sensorik zur räumlichen Detektion der Umgebung) und Microsoft HoloLens^{®} (mit Sensorik zur räumlichen Detektion der Umgebung). Jedoch können auch herkömmliche mobile Endgeräte wie beispielsweise eine Tablet PC mit eingebauter Kamera als AR-Terminals verwendet werden. Die eingebaute Kamera kann dann zum Einlesen sogenannter AR-Marker (*marker-based Augmented Reality*) verwendet werden, die an bestimmten Positionen einer Produktionslinie angeordnet sein können. Erkennt das AR-Gerät einen AR-Marker (z.B. einen Bar-Code oder einen QR-Code), können zu der jeweiligen Position gehörige Informationen am AR-Terminal angezeigt werden. HUDs bzw. HMDs haben den Vorteil, dass die betreffende Person die Hände frei hat, um die erforderlichen Arbeiten an der jeweiligen Position zu erledigen. Zusätzlich können auch herkömmliche mobile Endgeräte wie beispielsweise ein Tablet-PC mit eingebauter Kamera (die jedoch häufig nicht als AR-Terminals bezeichnet werden) verwendet werden. Diese können dann beispielsweise mit Text- oder Audio- Anweisungen arbeiten.

Der lokale Produktionsserver 11 für die Produktionslinie 31 speichert produktionsspezifische Daten (Fig. 1, Bezugszeichen 15) in Bezug auf die Produktionslinie 31 und kann diese - je nach Bedarf - dynamisch den AR-Terminals 41 und dem Administrator-Terminal 40 zur Verfügung stellen. Dies geschieht nicht einmalig am Beginn eines Prozesses, sondern kann während eines Prozesses schritthaltend mit dem Prozess immer an die aktuelle Situation angepasst werden. Anpassungen können oder müssen beispielsweise dann vorgenommen werden, wenn während des Prozesses ein oder mehrere Bedienpersonen (*Operators*) das System verlassen (ausloggen) oder neu dazu kommen (einloggen). Es muss dann vom System (unter Verwendung von Computeralgorithmen) dynamisch für jede Bedienperson, z.B. unter Berücksichtigung eines "*Skill-Levels*" der Bedienperson, eine aktuelle Liste an Aufgaben (*Tasks*) erstellt und der jeweiligen Bedienperson zur Verfügung gestellt werden. Dies geschieht auch - für jeden Task - nach der Erledigung eines Tasks durch eine Bedienperson. Es wird so sichergestellt, dass alle Tasks abgearbeitet werden, kein Task mehrfach zugeordnet wird, und jeder Bedienperson nur im Hinblick auf ihren Operator-Status zulässige Tasks angeboten oder zugewiesen werden. "Angeboten" heißt in diesem Zusammenhang, dass einer Bedienperson abhängig von ihrem Skill-Level (z.B. den Skill-Level "professionell") nicht nur ein bestimmter Task, sondern eine Auswahl an Clustern und Tasks (Guppe von Tasks) z.B. unter Berücksichtigung und der Positionen der anderen Bedienpersonen angeboten werden. Ein Bedienperson (Operator) kann somit (in gewissen Grenzen) auswählen, welche konkrete Aufgabe sie als nächstes ausführt.

Die Zuordnungen der Skill-Levels du den jeweiligen Operators können z.B. in einer Datenbank des Produktionsservers 11 oder des zentralen Servers gespeichert sein. Ein Operator kann sich z.B. mittels eines Codes oder eines Passwortes an einem Benutzer-Terminal authentifizieren und somit kann das System die Benutzer anhand der vernetzten Benutzer-Terminals, an denen die Benutzer "eingeloggt" sind, identifizieren.

Der zentrale Server 10 hat Zugriff auf die produktionsspezifischen Daten mehrerer (oder aller) Produktionslinien und kann diese regelmäßig aktualisieren. Er kann weiter dazu ausgebildet sein, (z.B. vergleichende) Datenanalysen (Fig. 1, Bezugszeichen 101) durchzuführen. Der zentrale Server 10 kann über das lokale Computernetzwerk mit dem lokalen Produktionsserver 11 verbunden sein. Wenn der zentrale Server 10 sich an einem anderen Standort befindet kann er auch über das öffentliche Internet (z.B. mittels eines virtuellen privaten Netzwerks, VPN) mit dem lokalen Produktionsserver 11 verbunden sein. Die erwähnten Datenanalyen können z.B. Echtzeitanalysen (*Realtime Analytics*), Benchmarking-Methoden und dgl. umfassen.

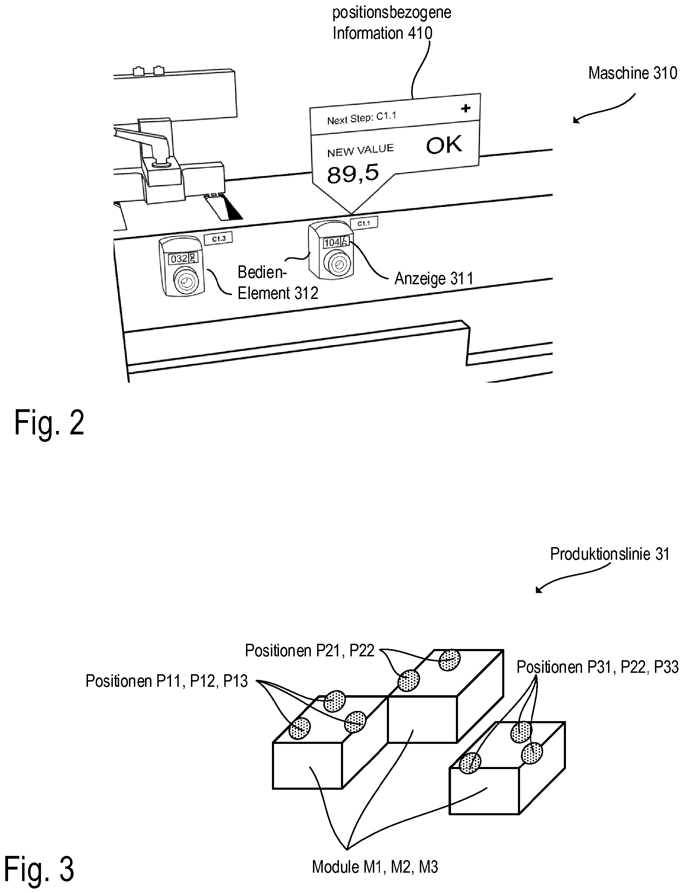

Die Produktionslinie 31 umfasst mindestens eine Maschine 310 mit mehreren Bedienelementen 312 und/oder Anzeigen 311 (siehe auch Fig. 2). Im vorliegenden Beispiel weisen die Bedienelemente 312 Anzeigen 311 auf. Als AR-Terminals können AR-Terminals mit Sensorik zur räumlichen Detektion der Umgebung verwendet werden. Das ermöglicht eine markerlose AR (*markerless augmented reality*) und ein genaues Tracking der Position der jeweiligen AR-Terminals. Im Authoring-Modus wird mit Hilfe mindestens eines AR-Terminals 41 und den darin enthaltenen Sensoren (und des einer auf dem Terminal aufgeführten Software) die Geometrie der Umgebung (und damit auch der Maschine 310) dreidimensional erfasst und ein korrespondierendes 3D-Modell erstellt und im lokalen Produktionsserver 11 gespeichert. Bei diesem Vorgang kommen verschiedene Sensoren und beispielsweise Algorithmen zur simultanen Lokalisierung und (3D-) Kartenerstellung (*Simultaneous Localization and Mapping,* SLAM) zum Einsatz. Geeignete Sensoren sind beispielsweise Kameras, TOF-Kameras (*Time-of Flight-*Kameras)*,* inertiale Messeinheiten (*Inertial Measurement Units,* IMUs), etc. Die Methoden und Algorithmen zur Datenerfassung und zum Aufbau eines 3D-Modells sind an sich bekannt und werden von kommerziell verfügbaren Geräten wie z.B. der HoloLens^{®} von Microsoft, Tango von Google, Intel RealSense^{™}, etc. unterstützt.

Fig. 2 illustriert schematisch einen Teil eines 3D-Modells der Maschine 310, wobei exemplarisch zwei Bedienelemente 312 mit Anzeigen 311 dargestellt sind. Die Bedienelemente können allgemein als Mensch-Maschine-Schnittstelle (*Human-Machine Interface,* HMI) bezeichnet werden. Im Authoring-Modus können des weiteren Positionen (z.B. in Form von Koordinaten) im Raum definiert werden, an denen später im Client-Modus positionsbezogene Informationen 410 betreffend die an der jeweiligen Position zur erledigenden Aufgabe (Task) dynamisch zugewiesen und angezeigt werden können. Die positionsbezogene Information 410 kann also eine Aufgabenstellung in einer für einen Menschen wahrnehmbaren Form (z.B. Text, Zahlenwerte, Grafik, etc.) repräsentieren. Beispielsweise kann neben jeder Mensch-Maschine-Schnittstelle (Bedienelement 312/Anzeige 311) eine Position "markiert" werden, an der im Client-Modus Informationen zu der jeweiligen Mensch-Maschine-Schnittstelle dargestellt werden können. Diese positionsbezogene Information kann von den AR-Terminals 41 der realen Umgebung überlagert werden. In dem vorliegenden Beispiel ist eine spezielle Markierung (z.B. mit einem QR-Code) der Position nicht nötig. Bei sogenannten markerlosen AR-Systemen wird die gewünschte Position basierend auf aktuellen vom AR-Terminal gelieferten Sensorinformationen und einem zuvor erstellten (oder anderweitig bereitgestellten) 3D-Modell der Umgebung wiedererkannt. In einfacheren Systemen können jedoch auch Marker verwendet werden. In einem anderen Beispiel können markerlose und markerbasierte AR-Terminals und nicht AR-fähige Terminals in einem System kombiniert werden. Es sei angemerkt, dass die Bedienelemente 312 mit Anzeigen 311 lediglich ein Beispiel für Positionen an der Maschine sind, an denen Aufgaben zu erledigen sein können. Andere Beispiele sind der Ein- oder Anbau von Maschinenteilen, Austausch von Verschleißteilen, etc.

In dem in Fig. 2 dargestellten Beispiel wird im Client-Modus der Bedienperson (*Operator*), die einen AR-Terminal trägt, die positionsbezogene Information 410 an jenem Punkt im Raum angezeigt, der zuvor im Authoring-Modus definiert wurde. Im vorliegenden Beispiel wird die positionsbezogene Information 410 an einem Punkt dargestellt, der sich räumlich in unmittelbarer Nähe zu dem Bedienelement 312 (mit "C1.1" beschriftet) befindet. Die Information 410 wird von dem AR-Terminal der jeweiligen Bedienperson angezeigt, sobald der zugehörige Punkt im Raum im Sichtfeld des AR-Terminals 41 ist, was wiederum abhängig von der Lage (Ort und Orientierung) des AR-Terminals 41 im Raum ist. Die Information 410 kann sich auf eine an der jeweiligen Position (z.B. am Ort des Bedienelements C1.1, siehe Fig. 2) von der Bedienperson zu erledigenden Aufgabe (*Task*) beziehen. Das heißt, jeder Aufgabe ist eine bestimmte Position im Raum zugeordnet.

Die an einer bestimmten Position dargestellte Information 410 kann beispielsweise ein Zahlenwert sein, den die Bedienperson am Bedienelement 312 einstellen soll und/oder an der zugehörigen Anzeige 311 überprüfen soll. Wenn die Bedienperson die Aufgabe erledigt hat, d.h. den gewünschten Wert am Bedienelement 312 eingestellt (bzw. den eingestellten Wert überprüft) hat, kann sie z.B. mit einer Geste im Sichtfeld des AR-Terminals 41 die Erledigung der Aufgabe bestätigen und den aktuellen Arbeitsschritt (Fig. 2, Schritt C1.1) abschließen. Das AR-Terminal 41 bietet der Bedienperson dann mehrere Orte (Positionen im Raum) zur Wahl oder einen bestimmten Ort (falls nur einer zu Auswahl steht) an und führt die Bedienperson dann zu jenem Ort, an dem die nächste Aufgabe, d.h. der nächsten Arbeitsschritt (z.B. beim nächsten Bedienelement/der nächsten HMI) erledigt werden soll. Beim Abschluss einer Aufgabe kann deren erfolgreiche Erledigung auch verifiziert und dokumentiert werden, z.B. durch abfotografieren des Bedienelementes 312 bzw. Anzeigeelementes 311 mittels des AR-Terminals. Für Analysewecke (vgl. Fig. 1, Analysen 101) können auch weitere Daten erfasst werden, beispielsweise den Namen, die Uhrzeit oder die Zeitdauer, die eine Person für eine bestimmte Aufgabe benötigt hat. Die Zeiten können im Produktionsserver personenbezogen oder anonymisiert abgespeichert werden. Das Erfassen der personenbezogenen Daten kann z.B. in pharmazeutischen Bereich im Hinblick auf Sicherheits-Audits sogar vorgeschrieben sein (GMP, *Good Manufacturing Practice*)*.* Das System kann in diesem Schritt die bereits erledigten Aufgaben erfassen und wird diese bei der dynamischen Erstellung der Aufgabenlisten keiner weiteren Bedienperson mehr anbieten oder zuweisen.

Fig. 1 und 2 zeigen die Struktur des Gesamtsystems und die Sicht einer Bedienperson (eines Operators) durch einen AR-Terminal 41. In den folgenden Fig. 3-9 wird die Funktionsweise des Systems illustriert, wobei die einzelnen Funktionen teilweise in dem Produktionsserver 11 und teilweise in den AR-Terminals 41 oder dem Administrator-Terminal 40 implementiert sein können. Wie oben bereits erläutert, werden im Authoring-Modus, eine oder mehrere Anlagenmodule einer Produktionslinie 31 (vgl. Fig. 1) geometrisch erfasst und mehrere Positionen bzw. Bereiche (*Spots*) definiert, an denen von einem Team von Bedienpersonen *(Operators)* eine Menge von Aufgaben zu erledigen sind. In der schematischen Darstellung gemäß Fig. 3 sind diese Positcionen mit P11, P12, P13, P21, etc. bezeichnet, welche die Menge alle möglichen Positionen bilden. Im vorliegenden Beispiel sind bestimmte Arbeitsbereiche in einer Produktionslinie (z.B. unterschiedliche Teile einer Maschine 310) als Anlagenmodule definiert, und jede definierte Position kann einem Modul zugeordnet werden. Ein (Anlagen-) Modul entspricht einer Maschine oder einem Teil einer Maschine in der betreffenden Produktionslinie. In der Darstellung gemäß Fig. 3 ist die Produktionslinie 31 (oder ein Teil davon) in drei Module M1, M2 und M3 gegliedert. Modul V1 umfasst die Positionen P11, P12 und P13, Modul M2 umfasst die Positionen P21 und P22, und Modul M3 umfasst die Positionen P31, P32 und P33. Jeder der Positionen P11, P12, P13, P21, P22, P31, P32 und P33 kann, wenn in dem betrachteten Prozess nötig, bei der Erstellung des Arbeitsdokuments für den jeweiligen Prozess (z.B. das Umrüsten einer Maschine) dynamisch eine bestimmte Aufgabe zugeordnet werden, die von einem Operator des Teams erledigt werden muss. Die Zuordnung der Positionen zu Modulen ist nicht zwingend und kann von den spezifischen Gegebenheiten der Produktionslinie und der exakten Anforderung des bei einem bestimmten Durchgang auf der Produktionslinie bearbeiteten (z.B. verpackten) Produkts abhängen. Jede der Positionen P11, P12, P13, P21, P22, P31, P32 und P33 kann z.B. durch drei Raumkoordinaten definiert werden. Jeder Position kann auch eine Orientierung zugeordnet sein (zum Zweck der 3D-Darstellung der eine Position zugeordneten positionsbezogenen Information zu der an der jeweiligen Position zu erledigenden Aufgabe).

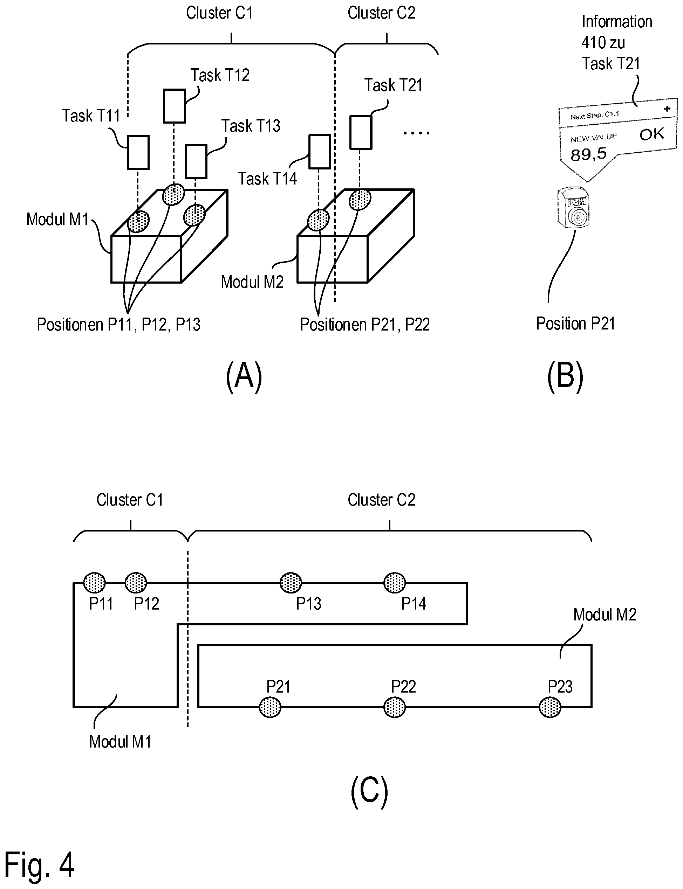

In Diagramm A aus Fig. 4 ist die Zuordnung von Aufgaben (*Tasks*) an die Positionen P11, P12, P13, P21, P22, P31, P32 und P33 dargestellt. Die einzelnen Aufgaben können zu Clustern C1, C2, etc. (Gruppen) zusammengefasst werden, wobei die einem bestimmten Cluster zugeordnete Aufgaben z.B. voneinander abhängen können (und deswegen z.B. nacheinander abgearbeitet werden müssen). Des Weiteren können Aufgaben, die an räumlich sehr nahe beieinander liegenden Positionen erledigt werden müssen einem Cluster zugeordnet werden. Ein Cluster kann - muss aber nicht - jene Tasks umfassen, die den Positionen eines Moduls zugeordnet sind. In dem Beispiel aus Fig. 4 (Diagramm A) sind die Tasks T11, T12 und T13 den Positionen P11, P12 und P13 in Modul M1 zugeordnet; die Tasks T14 und T21 sind den Positionen P21 und P22 in Modul M2 zugeordnet. Man sieht, die Menge von Tasks eines Moduls ist nicht gleich der Mange an Tasks eines Clusters. Im vorliegenden Beispiel sind die Tasks T11, T12, T13 und T14, dem Cluster CL1 zugeordnet und der Task T21 (neben weiteren Tasks) dem Cluster CL2. Wie bereits erwähnt, Module repräsentieren einen bestimmten Bereich bzw. Teil (die dreidimensionale Geometrie) einer Maschine in einer Produktionslinie, wohingegen Cluster die Tasks im Hinblick auf ihre logische Abfolge oder Zusammengehörigkeit gruppieren. Diagramm B aus Fig. 4 zeigt ein Detail aus Fig. 2. Die Position P21 bezeichnet den Ort, an dem sich das Bedienelement befindet und die dargestellte Information 410 betrifft den der Position P21 zugeordneten Task. Wie erwähnt besteht keine eins zu eins Zuordnung zwischen Anlagenmodulen und Cluster. Beispielsweise können, wie in Diagramm C der Fig. 4 gezeigt, zwei Anlagenmodule M1 und M2 auch teilweise übereinander angeordnet sein. Schon aufgrund der räumlichen Nähe kann es sinnvoll sein, die Aufgaben an den Positionen P21 und P13, P22 und P14 sowie P23 von der gleichen Person (oder den gleichen Personen) hintereinander erledigen zu lassen. In diesem Fall wird der rechte Teil des Moduls M1, der sich über dem Modul M2 befinden, demselben Cluster C2 zugeordnet wie das Modul M2. Nur der linke Teil des Moduls M1 wird dem Cluster C1 zugeordnet. Die Zuordnung zwischen den Tasks T11, T12, T13 und T14 und den Positionen P11, P12, P13, P21 und die zugehörigen positionsbezogenen Informationen können z.B. in einer Datenbank des Produktionsserver 11 der betreffenden Produktionslinie gespeichert sein.

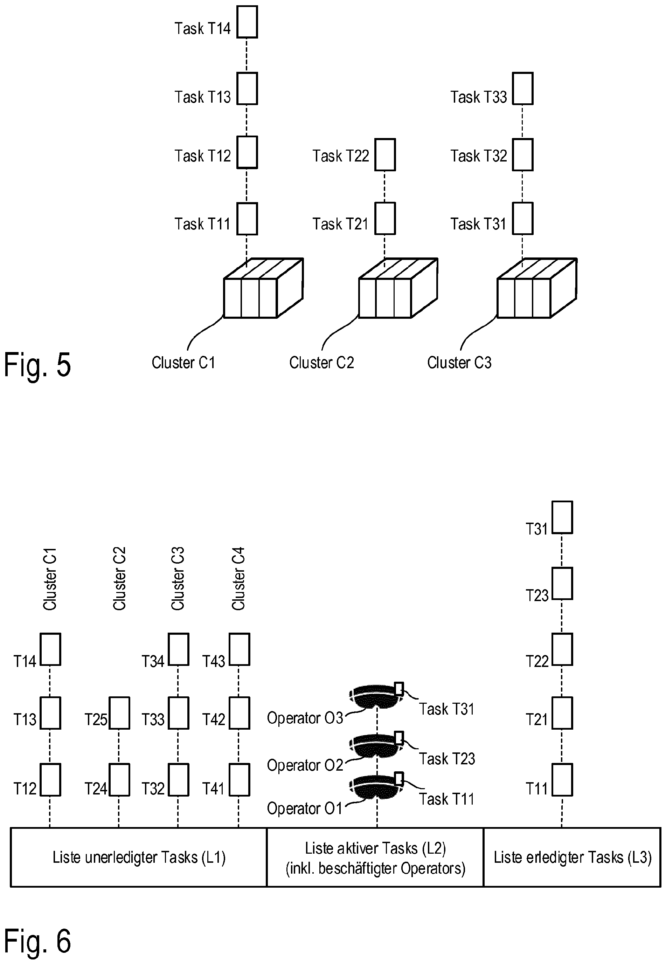

Fig. 5 zeigt ein Beispiel einer Systembeschreibung mittels Cluster und der Verteilung von Tasks auf mehrere Cluster. Im vorliegenden Beispiel sind dem ersten Cluster CL1 vier Tasks (T11, T12, T13, T14), dem zweiten Cluster zwei Tasks (T21, T22) und dem dritten Cluster drei Tasks (T31, T32, T33) zugeordnet. Das Gesamtsystem (in Bezug auf eine Produktionslinie 31) kann im Wesentlichen durch drei dynamisch verwaltete Listen definiert werden (siehe Fig. 6), nämlich einer Liste L1 unerledigter Tasks, die noch keinem Operator eines Teams zugewiesen sind, einer Liste L2 "aktiver" Tasks, die jeweils einem Operator zugewiesen sind, und einer Liste L3 erledigter Tasks. Die Liste L1 ist eine am Anfang des Prozesses dynamisch abhängig vom zu erzielenden Prozessergebnis (Prozessparameter, die notwendig sind, um das gewünschte Ergebnis zu erreichen) und variablen Rahmenbedingungen (z.B. Anzahl und Skill-Level der Bedienpersonen) generierte Aufgabenliste, die auch während des Prozesses automatisch angepasst werden kann. Die Liste L1 kann auch abhängig von Prozessparametern eines zuvor durchgeführten Prozesses sein. So können z.B. bestimmte Tasks entfallen, wenn die betreffenden Einstellungen/Konfigurationen an der Produktionslinie bereits für den vorherigen Prozess vorgenommen wurden und für den aktuellen Prozess nicht geändert werden müssen.

Die Listen L1, L2, L3 können ebenfalls in einer Datenbank des Produktion-Servers 11 gespeichert sein und von diesem dynamisch verwaltet werden. Dynamisch bedeutet in diesem Zusammenhang, dass die Liste der zu erledigenden Aufgaben und die Zuweisung der Aufgaben an die Operators eines Teams nicht statisch am Beginn des Prozesses (also bevor die Operators mit der Arbeit beginnen) erstellt werden, sondern sich während der Durchführung der Arbeit geändert/angepasst werden können. Die Anzahl der Operators des Teams kann sich während des Prozesses (während das Team den Prozess durchführt) ändern, die Skill-Levels der Operators im Team können sich ändern (wenn z.B. ein Operator mit dem Skill-Level "Trainee" durch einen Operator mit dem Skill-Level "Beginner" ausgewechselt wird). Diese Dynamik, welche bei "manueller" Planung unmöglich wäre, kann die Effizienz der Prozessdurchführung signifikant verbessern.

Fig. 6 illustriert exemplarisch die Beschreibung einer Produktionslinie mit elf unerledigten Tasks (Liste L1: Tasks TT12, T13 und T14 aus Cluster C1, Tasks T24 und T25 aus Cluster C2, Tasks T32, T33 und T34 aus Cluster C3, und Tasks T41, T42, und T43 aus Cluster C4), drei aktiven Tasks (Liste L2: Tasks/Operator T1 1/Ol, T23/O2 und Task T31/O3) und fünf erledigten Tasks (Liste L3: Tasks T11, T21, T22, T23 und T31). Die Operators O1, O2 und O3 können anhand der von ihnen benutzten AR-Terminals unterschieden werden. An dieser Stelle sei noch einmal erwähnt, dass die Liste L1 der unerledigten Tasks keine fest definierte Liste ist, sondern dass diese zu Beginn des Prozesses dynamisch erstellt werden kann. Hierbei hat eine Anzahl von Faktoren Einfluss auf die Erstellung der Liste. Zu Beginn eines Prozesses kann z.B. ein Operator (z.B. mit Skill-Level "Supervisor") entscheiden, ob aus dem vorangegangenen Prozess bekannte Einstellungen an der Produktionslinie bei der Zusammenstellung der Liste L1 der zu erledigenden Aufgatien berücksichtigt werde soll oder nicht. Basierend auf der so generierten Liste L1 werden die Listen L2 (aktive Tasks) für jeden Operator 01, 02, etc. dynamisch erstellt. Dabei wird berücksichtigt, ob ein Task T1, T2, etc. einem Operator 01, 02, etc. zugewiesen werden kann, d.h. ob er befugt ist, bestimmte Tasks durchzuführen und ob ihm diese Tasks als der Liste L1 zur Auswahl oder in einer fest vorgegebenen, dynamisch generierten Reihenfolge zugewiesen werden.

An dieser Stelle sei angemerkt, dass z.B. beim Umrüsten einer Produktionslinie (Umrüstungsprozess) nicht immer alle möglichen Einstellungen/Anpassungen an der Produktionslinie durchgeführt/überprüft werden müssen. In manchen Situationen ist das erwünscht. Jedoch kann es effizienter sein, beim Umrüstprozess nur an jeden Positionen der Produktionslinie Einstellungen/Anpassungen an der Produktionslinie durchzuführen/zu prüfen, an denen sich im Vergleich zum letzten Umrüstprozess die gewünschten Einstellungen/Anpassungen unterscheiden.

Jeder AR-Terminal hat eine eindeutige Kennung, beispielsweise die MAC-Adresse (*Media-Access-Control-*Adresse) des jeweiligen AR-Terminals im Computernetzwerk. Jedoch können beliebige andere eindeutige Kennungen zur Identifizierung der AR-Terminals eines Operators verwendet werden. Mit der Kennung können persönliche Daten und/oder Daten bezüglich der Erledigung der Aufgaben (ermittelte Zeiten, Dokumentation, etc.) der betreffenden Operators verknüpft sein.

In vielen Produktionsanlagen müssen Maschinen von mehreren Personen (hier als Operators bezeichnet) bedient werden, die als Team arbeiten müssen (beispielsweise beim Umrüsten einer Maschine für die Produktion oder die Verpackung oder das Handling eines andren Produkts). Die Mitglieder eines Teams müssen gut aufeinander eingespielt sein, um effizient zusammenzuarbeiten. In der Praxis werden für jede Maschine (oder für eine Gruppe von Maschinen einer Produktionslinie) Ablaufpläne (z.B. in Papierform) für die Personen eines Teams erstellt, und jedes Teammitglied arbeitet seinen Ablaufplan ab. Die Teamgröße ist für einen bestimmten Prozess (z.B. das Umrüsten einer Maschine) fix und kann nicht ohne Weiteres nach Beginn der Arbeit geändert werden. Die Ablaufpläne sind statisch. Falls ein Teammitglied ausfällt (oder z.B. gerade ein Schichtwechsel stattfindet), kann das den gesamten Prozess erheblich verzögern. Selbst durch Hinzufügen einer weiteren Person zu einem Team, kann der gesamte Prozess (die Summe der Tasks) nicht nennenswert beschleunigt werden, da dies eingespielte Ablaufpläne durcheinander bringen würde.

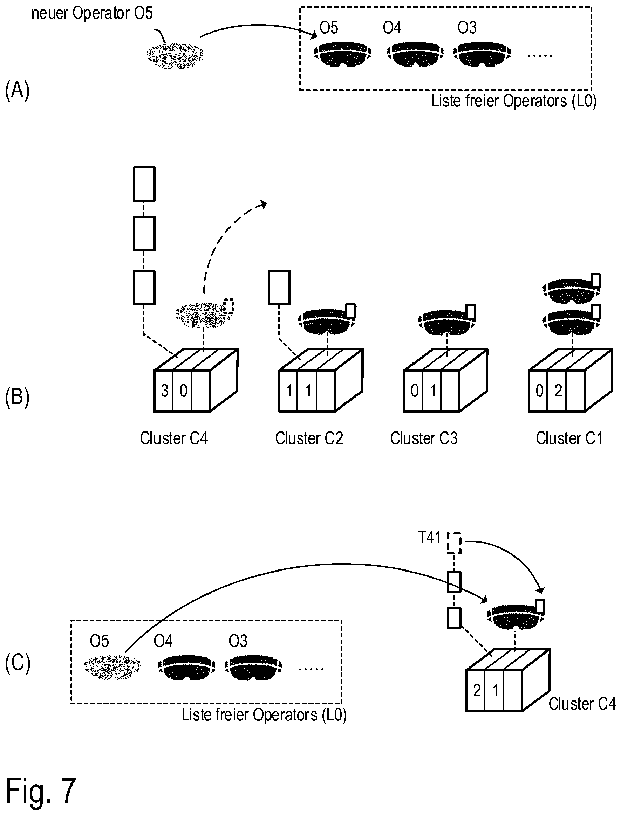

Das hier beschriebene System ermöglicht eine flexible Anpassung der Teamgrößen mit Hilfe von AR-Terminals (vgl. Fig. 1), die von den Teammitgliedern (den Operators) benutzt werden. Im Folgenden wird eine Methode beschrieben, die es ermöglicht, mit Hilfe der vernetzten AR-Terminals 41 dynamisch die Größe eines Teams von z.B. unterschiedlich ausgebildeten (d.h. mit unterschiedlichem Skill-Level. z.B. "Trainee", "Beginner", "Advanced", "Professional", "Supervisor", etc.) und mit unterschiedlichen Terminals ausgestatteten Operators und auch die zugehörige Zuteilung von Aufgaben an die Teammitglieder dynamisch anzupassen. Das Beispiel aus Fig. 7 zeigt eine Situation, in der das Team um einen Operator (Operator O5) erweitert wird (eine Person kommt neu in das Team). Dazu registriert sich der AR-Terminal des Operators O5 beim Produktions-Server 11. Diese Registrierung kann automatisch erfolgen (z.B. nach dem Verbinden des AR-Terminals des Operators O5 mit einem bestimmten WLAN-Access-Point), oder vom Operator O5 manuell (z.B. durch Eingabe eines Passworts) ausgelöst werden (z.B. mit seinem AR-Terminal 41 oder einem Administrator-Terminal 40). Nach der Registrierung wird Operator O5 als freier Operator in die Liste L0 der freien Operators (und ggf. unter Berücksichtigung des Skill-Levels) aufgenommen (d.h. jene Operators/Teammitglieder, denen noch keine Aufgabe zugewiesen oder angeboten ist). Diese Situation ist in Diagramm A aus Fig. 7 dargestellt.

Diagramm B aus Fig. 7 illustriert exemplarisch, wie automatisch eine Entscheidung getroffen werden kann, welcher noch unerledigte Task (aus einem der Cluster) welchem freien Operator zugewiesen wird. Einem Operator mit einem niedrigen Skill-Level (z.B. "Beginner") kann vom System dynamisch eine Aufgabenliste zugewiesen werden, die er in einer vorgegeben Reihenfolge abarbeiten muss. Das System wird auch keine bereits erledigten Tasks und auch keine für den Skill-Level des Operators ungeeigneten Tasks zuweisen. Des Weiteren kann das System dem ("Beginner"-) Operator bevorzugt Tasks zuweisen, die an einen möglichst freien Teil der Produktionslinie durchzuführen sind. Zu diesem Zweck kann das System mittels eines geeigneten Algorithmus die beste Startposition eines "Beginner"-Operators feststellen und anfangs eine Liste von Tasks generieren, die ihm - schritthaltend mit der sich während des Prozesses immer wieder ändernde Situation - angeboten werden. In einer Situation, in der ein Operator mit einem höheren Skill-Level (z.B. "professional"), der aus einer Vielzahl von Clustern und Tasks, die ihm das System anbietet, wählen kann, einem "Beginner"-Operator zuvorkommt und ihm "im Weg steht" (was verhindert, dass der "Beginner"-Operator einen bestimmten Task durchführen kann), kann das System dynamisch eine neue (z.B. nach bestimmten Kriterien optimierte) Aufgabenliste für den "Beginner"-Operator generieren (Autopilot-Modus). Dieser Prozess läuft konstant und mit dem Prozess schritthaltend im Hintergrund ab und sorgt für eine optimale Verteilung der Operators an der Produktionslinie. Je nach Skill-Level eines Operators können dem Operator jeweils nur ein Task auf einmal zugewiesen werden oder auch eine Gruppe von Tasks, aus denen der Operator (mittels seines Benutzer-Terminals) wählen kann. Wenn ein Operator einen bestimmten Task (mittels seines Benutzer-Terminals) bestätigt hat, kann der Benutzer-Terminal virtuell an der der jeweiligen Aufgabe zugeordneten Position im Raum die zugehörige (positionsbezogene) Information Anzeigen, die den Operator bei der Durchführung der Aufgabe unterstützen oder anleiten soll.

In dem in Fig. 7, Diagramm B, gezeigten Beispiel werden die Cluster entsprechend der Anzahl der unerledigten Tasks absteigend sortiert (erstes Kriterium). Als zweites Kriterium zur dynamischen Generierung kann die Anzahl der aktiven Tasks (bei aufsteigender Sortierung) verwendet werden. Das heißt, einem freien Operator (hier Operator O5) (z.B. mit Skill-Level "Beginner") wird ein Task aus jenem Cluster zugewiesen, der am meisten unerledigte Tasks umfasst. Führt dieses Auswahlkriterium nicht zu einem eindeutigen Ergebnis (z.B. weil bei zwei Cluster die Zahl der unerledigten Tasks gleich ist), wird dem Operator O5 ein Task aus jenem Cluster zugewiesen, der am meisten unerledigte Tasks und am wenigsten aktive Tasks umfasst. Alternativ oder zusätzlich können weitere Auswahlkriterien berücksichtigt werden. Beispielsweise kann der dem System bekannte (und regelmäßig aktualisierte) aktuelle Aufenthaltsort aller Operators als Kriterium insofern berücksichtigt werden, als ein oder mehrere Tasks jenem (freien) Operator zugewiesen oder angeboten wird, der am nächsten an der dem Task zugeordneten Position steht. Dieser Ansatz erlaubt es, die Wege der Operators zu verkürzen. Es ist auch möglich bestimmte Zuordnungen zwischen Task und Operator zu vermeiden, beispielsweise wenn eine bestimmte Zuordnung dazu führen würde, dass zu viele Operators sich gleichzeitig in einem bestimmten räumlichen Bereich aufhalten würden. Wie erwähnt kann die Position der einzelnen Operator z.B. mit Hilfe der AR-Terminals 41 getrackt werden und diese Information ebenfalls bei der dynamischen Anpassung der Aufgabenlisten L1-L3 berücksichtigt werden. Es versteht sich, dass für kleine Produktionslinien (z.B. nur eine einzige Maschine) keine Gruppierung der Tasks in Cluster nötig sein muss. Als Kriterien für die Zuweisung der Aufgaben an Operators können dann z.B. die resultierenden Wege der Operators oder ähnliches herangezogen werden. Selbst eine zufällige Zuordnung wäre möglich, wenn die Anwendung dies erlaubt.

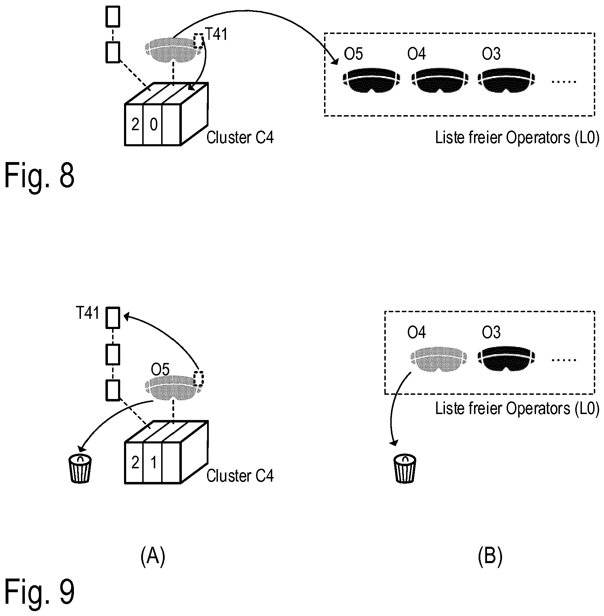

Im vorliegenden Beispiel umfasst der Cluster C4 drei unerledigte Tasks und keinen aktiven Task (weil z.B. gerade ein Task erledigt wurde, siehe auch Fig. 8), Cluster C2 einen unerledigten Task und einen aktiven Task, Cluster C3 keinen unerledigten Task und einen aktiven Task und Cluster C1 keinen unerledigten Task und zwei aktive Tasks. Folglich wird dem freien Operator O5 - unter anderem - ein Task (z.B. Task T41) aus dem Cluster C4 angeboten. Diese Zuweisung ist in Diagramm C aus Fig. 7 schematisch dargestellt. Der Task wird in der Liste L1 der unerledigten Tasks gelöscht und in die Liste L2 der aktiven Tasks aufgenommen. Der Operator O5 wird aus der Liste L0 der freien Operatoren gestrichen (vgl. Fig. 6). Innerhalb der Cluster kann die Reihenfolge der Tasks fest vorgegeben sein. Die Reihenfolge wird im Authoring-Modus festgelegt, falls es eine notwendige Reihenfolge gibt (z.B. erst ein Teil ausbauen, dann ein neues Teil einbauen). Sofern eine feste Reihenfolge der Tasks (oder einer Teilmenge der Tasks) nicht durch die Produktionslinie vorgegeben ist, können diese nach bestimmten Auswahlkriterien ausgewählt werden (beispielsweise so, dass räumliche Überschneidungen der Arbeitsbereiche (d.h. Kollisionen) der Operators an den den Tasks zugeordneten Positionen vermieden werden). In einer Variante können auch mehrere Tasks, bei denen es nicht auf die Reihenfolge der Erledigung ankommt, gleichzeitig einem Operator angeboten werden. In diesem Fall bleibt die Reihenfolge der Erledigung dem Operator überlassen. Sollte er nicht alle Tasks erledigen, (z.B. weil er den Prozess verlässt, beispielsweise bei einem Schichtwechsel) werden die von dieses Operators nicht erledigten Tasks bei der Erstellung der Aufgabenliste der anderen und gegebenenfalls neuen Operators vom System berücksichtigt.

Fig. 8 illustriert schematisch eine Situation, in der ein Operator die Erledigung eines Tasks (einer Aufgabe) oder die Erledigung des letzten Tasks einer Gruppe von Tasks (falls dem Operator mehrerer Tasks zugewiesen wurden) bestätigt hat. Diese Bestätigung erfolgt in der Regel durch den Operator z.B. manuell an seinem AR-Terminal (z.B. durch Betätigen einer virtuellen Taste im Sichtfeld des AR-Terminals, durch Betätigen einer realen Taste am AR-Terminal, mittels Bluetooth Controller, Sprachsteuerung, etc.). In diesem Fall wird der aktive Task (z.B. Task 41) aus der Liste L2 der aktiven Tasks gelöscht und in die Liste L3 der erledigten Tasks aufgenommen, und der betreffende Operator (z.B. Operator O5) wird wieder in die Liste L0 der freien Operators aufgenommen. Es gibt Situationen, in denen ein aktiver Operator seinen Arbeitsplatz verlässt (oder verlassen muss), ohne dass er den ihm zugewiesenen Task beendet (oder beenden kann). Beim Verlassen des Arbeitsplatzes wird der AR-Terminal des betreffenden Operators vom Server 11 abgemeldet (*unregister*)*.* Dieses Abmelden kann automatisch erfolgen (z.B. wenn die WLAN-Verbindung zwischen AR-Terminal und Access-Point unterbrochen wird) oder manuell vom Operator oder einer anderen Person veranlasst werden (z.B. über das Administrator Terminal 40 oder ein AR-Terminal). Diese Situation ist in Diagramm A aus Fig. 9 dargestellt. Im dargestellten Beispiel hat der Operator O5 sein AR-Terminal vom Server 11 abgemeldet. Der aktive, nicht erledigte Task (z.B. Task T41) und der betreffende Operator O5 wird aus der Liste L2 der aktiven Tasks entfernt und der Task wird wieder in die Liste L1 der unerledigten Tasks aufgenommen, und kann z.B. einem anderen Operator zugewiesen werden (vgl. Fig. 7, Diagramm C). Wird der AR-Terminal eines freien Operators (z.B. O4) abgemeldet, wird er aus der Liste L0 der freien Operators entfernt.

Im Folgenden werden einige Aspekte der hier beschriebenen Ausführungsbeispiele zusammengefasst (vgl. Fig. 1-9). Es sei jedoch angemerkt, dass es sich nicht um eine vollständige, sondern lediglich um eine exemplarische Aufzählung handelt. Es wird ein System zur Unterstützung von Teamarbeit mittels *Augmented Reality* (AR) beschrieben. Gemäß den hier beschriebenen Beispielen, weist das System einen Produktionsserver (siehe Fig. 1) auf, der dazu ausgebildet ist, die dreidimensionale Geometrie von zumindest einem Teil einer Maschine zu speichern (vgl. Fig. 2). Des Weiteren werden eine Vielzahl von Aufgaben (Tasks) gespeichert, wobei jeder Aufgabe einer Position im Raum, bei der die jeweilige Aufgabe zu erledigen ist, sowie positionsbezogene Information betreffend die Erledigung der Aufgabe zugeordnet werden kann (vgl. Fig. 4, Diagramme A und B). Das System weist weiter eine Vielzahl von AR-Terminals (siehe Fig. 1) auf, die über ein Computernetzwerk mit dem Produktionsserver verbunden sind. Dabei kann jeder AR-Terminal einer Person eines Teams zugeordnet sein. Der Produktionsserver ist dazu ausgebildet, dynamisch ein "Rezept" für die Durchführung des Prozesses zu generieren (und dieses ggf. anzupassen), wobei jeder Person des Teams (z.B. unter Berücksichtigung des Skill-Levels der Person) eine bestimmte Aufgabe zuzuweisen oder eine Gruppe (Cluster) von Aufgaben anzubieten (vgl. Fig. 7), indem an der der jeweiligen Aufgabe zugeordneten Position im Raum die zugehörige positionsbezogene Information auf dem AR-Terminal der betreffenden Person dargestellt wird (vgl. Fig. 4, Diagramm B). Je nach Implementierung kann mit Hilfe der AR-Terminals die Position der einzelnen Operators schritthaltend (d.h. während eines Prozesses) erfasst und (z.B. zusammen mit den zugehörigen Zeiten und aktiven Tasks) gespeichert werden. Diese Daten können für eine spätere Datenanalyse oder auch für eine Echtzeit-Datenanalyse (*Realtime Analytics*) verwendet werden (vgl. Fig. 1). Beispielsweise können mit Hilfe dieser Daten, die Arbeitsabläufe (teil-) automatisch optimiert werden (z.B. die Zuordnung von Tasks an Cluster oder die Reihenfolge von Tasks in einem Cluster oder das Vermeiden von Kollisionen zweier oder mehrerer Operators).

Der Produktionsserver kann weiter dazu ausgebildet sein, jede Person des Teams, der eine Aufgabe zugewiesen oder angeboten wurde, als beschäftigt zu markieren und die zugewiesene Aufgabe als aktiv zu markieren. Diese Markierungen erfolgt beispielsweise durch Aufnahme von Person und Aufgabe in die Liste L2 der aktiven Aufgaben (vgl. Fig. 6). Des Weiteren kann der Produktionsserver eine Aufgabe als erledigt zu markieren, wenn die (beschäftigte) Person, der diese Aufgabe zugewiesen ist, die Erledigung der Aufgabe über ihren AR-Terminal bestätigt. Diese Markierung erfolgt beispielsweise durch Aufnahme der Aufgabe in die Liste L3 der erledigten Aufgaben (vgl. Fig. 6).

Die Markierung einer Aufgabe als aktiv wird wieder gelöscht (ohne die Aufgabe als erledigt zu markieren), wenn der AR-Terminal der Person, der die Aufgabe zugewiesen ist, vom Produktionsserver abgemeldet wird, ohne dass die Person zuvor die Erledigung der Aufgabe bestätigt hat. Die Löschung der Markierung kann beispielsweise dadurch erfolgen, dass die betreffende Aufgabe wieder in die Liste L1 der unerledigten Aufgaben aufgenommen wird (vgl. Fig. 6). Eine Person, deren AR-Terminal vom Produktionsserver abgemeldet wurde, steht für die Zuweisung weiterer Aufgaben nicht mehr zur Verfügung.

Der Produktionsserver kann Personen, denen aktuell keine Aufgabe zugewiesen ist (Liste L0 freier Operators, vgl. Fig. 7), solange neue (unerledigte) Aufgaben zuweisen, solange es Aufgaben gibt, die weder als aktiv noch als erledigt markiert sind und es durch die Zuordnung zu keinen Kollisionen (Überschneidung der Arbeitsbereiche zweier Operators aufgrund räumlich nahe beieinander liegender Tasks) kommt. Eine zusätzliche Person mit einem zusätzlichen AR-Terminal kann dem Team hinzuzufügt werden, indem das zusätzliche AR-Terminal vom Produktionsserver registriert wird (vgl. Fig. 7, Diagramm A). In den hier beschriebenen Beispielen werden die Personen des Teams anhand einer Kennung der ihnen zugeordneten AR-Terminals vom Produktionsserver identifiziert bzw. unterschieden.

Jede Aufgabe eines Prozesses (z.B. das Umrüsten einer Produktionslinie oder eines Teils davon) kann einem Cluster zugeordnet werden, und jede Aufgabe kann entweder als unerledigt, als aktiv oder erledigt markiert sein (siehe Fig. 5 und 6). Bei der Zuweisung von Aufgaben an Personen kann der Produktionsserver eine Priorisierung vornehmen. Beispielsweise können zunächst Aufgaben in jenem Cluster berücksichtigt werden, der am meisten unerledigte Aufgaben und am wenigsten aktive Aufgaben umfasst sofern dabei keine Kollisionen mit anderen Operators zu erwarten sind. Hierzu können mit dem Prozess schritthaltend die Listen der Tasks jedes Operators unter Berücksichtigung von definierten Randbedingungen - wie zum Beispiel der für einen bestimmten Task notwendige Skill-Level oder Abhängigkeiten von Aufgaben (*Tasks*) (logische Abhängigkeiten oder räumliche Abhängigkeiten) untereinander - generiert oder aktualisiert werden.

## Patentansprüche

1. Computergestütztes System zur Unterstützung von Teamarbeit, das folgendes aufweist:
einen Produktionsserver (11), der dazu ausgebildet ist, folgendes zu speichern: die dreidimensionale Geometrie von zumindest einem Teil einer Maschine einer Produktionslinie und eine Vielzahl von Aufgaben (T12, T22, ...), wobei jeder Aufgabe eine Position (P11, P 12, ...) im Raum, bei der die jeweilige Aufgabe (T 12, T22, ...) zu erledigen ist, sowie positionsbezogene Information betreffend die Erledigung der Aufgabe zugeordnet sind;
eine Vielzahl von Benutzer-Terminals (41), die über ein Computernetzwerk mit dem Produktionsserver (11) verbunden sind, wobei jeder Benutzer-Terminal (41) einer Person (O3, O4, O5, ...) eines Teams zugeordnet ist,
wobei der Produktionsserver (11) weiter dazu ausgebildet ist, eine Aufgabenliste (LI) für einen von dem Team zu bearbeitenden Prozess dynamisch zu generieren sowie schritthaltend und dynamisch anzupassen und hierbei jeder Person (O3, O4, O5, ...) des Teams eine einzelne Aufgabe (T11, T12, ...) oder eine Gruppe von Aufgaben aus dieser Liste (LI) zuzuweisen, wobei die der jeweiligen Aufgabe (T1 1, T12, ...) zugeordnete positionsbezogene Information (410) auf dem Benutzer-Terminal (41) der betreffenden Person (O3, O4, O5, ...) darzustellen,
wobei die Zuweisung der Aufgaben dynamisch abhängig von der Anzahl der Personen (O3, O4, O5, ...) sowie abhängig von Prozessparametern eines zuvor durchgeführten Prozesses erfolgt und bei einer Änderung der Anzahl der Personen (O3, O4, O5, ...) aktualisiert wird,
wobei solche Aufgaben zu Gruppen zusammengefasst werden, die logisch und/oder räumlich voneinander abhängen, und/oder nacheinander abgearbeitet werden müssen und
wobei der vorgegebene Prozess das Rüsten oder Umrüsten einer oder mehrerer Maschinen der Produktionslinie beinhaltet.

2. System gemäß Anspruch 1,
wobei der Benutzer-Terminal (41) dazu ausgebildet ist, die der jeweiligen Aufgabe (T11, T12, ...) zugeordnete positionsbezogene Information (410) an der der Aufgabe zugeordneten Position (P11, P12, ...) im Raum darzustellen.

3. System gemäß einem der Ansprüche 1 bis 2,
wobei der Produktionsserver (11) weiter dazu ausgebildet ist, jeder Person eine einzelne Aufgabe oder eine Gruppe von Aufgaben zuzuweisen, wobei bei der Zuweisung ein Skill-Level der jeweiligen Person berücksichtigt wird.

4. System gemäß einem der Ansprüche 1 bis 3,
wobei der Produktionsserver (11) weiter dazu ausgebildet ist, jede Person (O5, ...) des Teams, der eine Aufgabe (T41) zugewiesen wurde, als beschäftigt zu markieren und die zugewiesene Aufgabe als aktiv zu markieren.

5. System gemäß Anspruch 4,
wobei der Produktionsserver (11) weiter dazu ausgebildet ist, eine Aufgabe (T41) als erledigt zu markieren, wenn die Person (OS), der die Aufgabe (T41) zugewiesen ist, die Erledigung der Aufgabe (T41) über ihren Benutzer-Terminal (41) bestätigt.

6. System gemäß Anspruch 5,
wobei der Produktionsserver (11) weiter dazu ausgebildet ist, die Markierung einer Aufgabe als aktiv wieder zu entfernen, ohne sie als erledigt zu markieren, wenn der Benutzer-Terminal (41) der Person (OS), der die Aufgabe (T41) zugewiesen ist, vom Produktionsserver (11) abgemeldet wird, ohne dass die Person (O5) die Erledigung der Aufgabe (T41) bestätigt hat.

7. System gemäß Anspruch 5 oder 6,
wobei der Produktionsserver (11) weiter dazu ausgebildet ist, Personen (O2, O4, ...), denen aktuell keine Aufgabe zugewiesen ist, solange eine neue Aufgabe aus der Vielzahl von Aufgaben zuzuweisen, solange die Vielzahl von Aufgaben (T11, T12, ...) Aufgaben enthält, die weder als aktiv noch als erledigt markiert sind.

8. System gemäß einem der Ansprüche 1 bis 7,
wobei der Produktionsserver (11) weiter dazu ausgebildet ist, eine zusätzliche Person (O5) mit einem zusätzlichen Benutzer-Terminal (41) dem Team hinzuzufügen, indem das zusätzliche Benutzer-Terminal (41) vom Produktionsserver registriert wird.

9. System gemäß einem der Ansprüche 1 bis 8,
wobei der Produktionsserver (11) weiter dazu ausgebildet ist, die Personen (O3, O4, O5, ...) des Teams anhand einer Kennung der ihnen zugeordneten Benutzer-Terminals (41) zu identifizieren.

10. System gemäß einem der Ansprüche 1 bis 9,
wobei jeder der Aufgaben (T11 , T12, ...) einer Gruppe zugeordnet ist und jede Aufgabe einer Gruppe entweder als unerledigt, als aktiv oder erledigt markiert ist.

11. System gemäß Anspruch 10,
wobei der Produktionsserver (11) weiter dazu ausgebildet ist, bei der Zuweisung von Aufgaben an Personen zunächst Aufgaben in jener Gruppe zu berücksichtigen, der am meisten unerledigte Aufgaben und am wenigsten aktive Aufgaben umfasst.

12. System gemäß einem der Ansprüche 1 bis 11,
wobei die Benutzer-Terminals (41) Augmented-Reality- (AR-) Terminal sind, die jeweils ein stereoskopisches Head-up-Display sowie einen oder mehrere Sensoren aufweisen, welche die Geometrie der Umgebung dreidimensional erfassen.

13. System gemäß Anspruch 12,
wobei zumindest ein Teil der AR-Terminals (41) und/oder der Produktionsserver (11) dazu ausgebildet sind, in einem Authoring-Modus aus den Sensordaten ein 3D-Modell der Umgebung zu erstellen, das auch die den Aufgaben (T12, T22, ...) zugeordneten Positionen (P11, P12, ...) enthält.

14. System gemäß einem der Ansprüche 1 bis 13,
wobei der Produktionsserver (11) weiter dazu ausgebildet ist, für einen von dem Team zu bearbeitenden Prozess anfangs eine Liste (LI) von Aufgaben zu erstellen, die für die Durchführung des Prozesses benötigt werden,
wobei bei Erstellung der Liste (LI) Prozessparameter eines zuvor durchgeführten Prozesses berücksichtig werden.

15. System gemäß Anspruch 14,
wobei die Liste (LI) von Aufgaben fortlaufend dynamisch angepasst werden unter Berücksichtigung der bereits erledigten Aufgaben (T12, T22, ...) und der sich gegebenenfalls ändernden Anzahl von Personen (O3, O4, O5, ...) und deren Skill-Level.

16. Computergestütztes Verfahren zur Unterstützung von Teamarbeit, das folgendes umfasst:
Speichern folgender Daten auf einem einen Produktionsserver (11): die dreidimensionale Geometrie von zumindest einem Teil einer Maschine einer Produktionslinie und eine Vielzahl von Aufgaben (T12, T22, ...), wobei jeder Aufgabe eine Position (P 11, P 12, ...) im Raum, bei der die jeweilige Aufgabe (T 12, T22, ...) zu erledigen ist, sowie positionsbezogene Information betreffend die Erledigung der Aufgabe zugeordnet sind;
Anmelden einer Vielzahl von Benutzer-Terminals (41), die über ein Computernetzwerk mit dem Produktionsserver (11) verbunden sind, an dem Produktionsserver (11), wobei jeder Benutzer-Terminal (41) einer Person (O3, O4, O5, ...) eines Teams zugeordnet ist,
dynamisches Generieren sowie schritthaltendes und dynamisches Anpassen einer Aufgabenliste (LI) für einen von dem Team zu bearbeitenden Prozess, einschließlich Zuweisen einer einzelnen Aufgabe (T11, T12, ...) oder einer Gruppe von Aufgaben aus dieser Liste (LI) an jede Person (O3, O4, O5, ...) des Teams, wobei die der jeweiligen Aufgabe (T11, T12, ...) zugeordnete positionsbezogene Information (410) auf dem Benutzer-Terminal (41) der betreffenden Person (O3, O4, O5, ...) dargestellt wird,
wobei die Zuweisung der Aufgaben dynamisch abhängig von der Anzahl der Personen (O3, O4, O5, ...) sowie abhängig von Prozessparametern eines zuvor durchgeführten Prozesses erfolgt und bei einer Änderung der Anzahl der Personen (O3, O4, O5, ...) aktualisiert wird,
wobei solche Aufgaben zu Gruppen zusammengefasst werden, die logisch und/oder räumlich voneinander abhängen, und/oder nacheinander abgearbeitet werden müssen und
wobei der vorgegebene Prozess das Rüsten oder Umrüsten einer oder mehrerer Maschinen der Produktionslinie beinhaltet.

17. Verfahren gemäß Anspruch 16,
wobei der jeweilige Benutzer-Terminal (41) die der jeweiligen Aufgabe (T11, T12, ...) zugeordnete positionsbezogene Information (410) an der der Aufgabe zugeordneten Position (PI 1, PI 2, ...) im Raum darstellt.

18. Verfahren gemäß Anspruch 16 oder 17,
wobei jeder Benutzer-Terminal (41) die Aufgabe, die der dem Benutzer-Terminals (41) zugeordneten Person (O3, O4, O5, ...) zugewiesen wurde, anzeigt und, wenn der Benutzer die Aufgabe bestätigt hat, die der jeweiligen Aufgabe (T11, T12, ...) zugeordnete positionsbezogene Information (410) an der der jeweiligen Aufgabe zugeordneten Position (P11, P12, ...) im Raum darstellt.

19. Verfahren gemäß einem der Ansprüche 16 bis 18, wobei das Zuweisen einer Aufgabe (T11, T12, ...) aus der Vielzahl von Aufgaben umfasst:
Zuweisen einer Gruppe von Aufgaben (T11, T12, ...) aus der Vielzahl von Aufgaben an eine oder mehrere Personen (O3, O4, O5, ...) des Teams, wobei der Benutzer-Terminal (41) der Person (O3, O4, O5, ...) die Auswahl einer Aufgabe aus der Gruppe von Aufgaben (T11, T12, ...) ermöglicht; und
Darstellen der positionsbezogenen Information (410), die der von der Person (O3, O4, O5, ...) ausgewählten Aufgabe (T11, T12, ...) zugeordnet ist, auf dem Benutzer-Terminal (41) der betreffenden Person (O3, O4, O5, ...).

20. Verfahren gemäß einem der Ansprüche 16 bis 19,
wobei die Aufgaben (T11, T12, ...), die den Aufgaben zugeordneten Positionen im Raum und die zugehörigen positionsbezogenen Informationen (410) in einer Datenbank des Produktionsservers (11) gespeichert sind.

## Claims

1. Computer-assisted system for supporting teamwork, comprising:
a production server (11) configured to store: the three-dimensional geometry of at least one part of a machine in a production line and a plurality of tasks (T12, T22, ...), each task being assigned a position (P11, P12, ...) in space, at which the relevant task (T12, T22, ...) is to be performed, and positioned-based information regarding the completion of the task;
a plurality of user terminals (41) connected to the production server (11) via a computer network, each user terminal (41) being assigned to a person (O3, O4, O5, ...) in a team,
wherein the production server (11) is further configured to generate dynamically and to adapt dynamically and in real time a task list (LI) for a process to be handled by the team, and each person (O3, O4, O5, ...) in the team is allocated an individual task (T11, T12, ...) or a group of tasks from this list (LI), the position-based information (410) assigned to each task (T11, T12, ...) being to be displayed on the user terminal (41) of the relevant person (O3, O4, O5, ...) ,
wherein the tasks are allocated dynamically as a function of the number of persons (O3, O4, O5, ...) and as a function of process parameters of a previously performed process and are updated if the number of persons (O3, O4, O5, ...) changes,
wherein tasks which are logically and/or spatially dependent on one another are combined into groups and/or have to be processed consecutively, and
wherein the specified process includes setting up or retooling one or more machines in the production line.

2. System according to claim 1,
wherein the user terminal (41) is configured to display the position-based information (410) assigned to the relevant task (T11, T12, ...) in the position (P11, P12, ...) in space assigned to the task.

3. System according to either claim 1 or claim 2,
wherein the production server (11) is further configured to allocate each person an individual task or a group of tasks, a skill level of the relevant person being taken into account in the allocation.

4. System according to any of claims 1 to 3,
wherein the production server (11) is further configured to mark each person (O5, ...) in the team who has been allocated a task (T41) as busy and to mark the allocated task as active.

5. System according to claim 4,
wherein the production server (11) is further configured to mark a task (T41) as complete when the person (O5) who is allocated the task (T41) confirms completion of the task (T41) via his user terminal (41).

6. System according to claim 5,
wherein the production server (11) is further configured to remove the marking of a task as active again, without marking it as complete, if the user terminal (41) of the person (O5) who is allocated the task (T41) is signed out from the production server (11) without the person (O5) having confirmed completion of the task (T41).

7. System according to either claim 5 or claim 6,
wherein the production server (11) is further configured to allocate people (O2, O4, ...) who are currently not allocated a task a new task from the plurality of tasks for as long as the plurality of tasks (T11, T12, ...) contains tasks which are marked neither as active nor as complete.

8. System according to any of claims 1 to 7,
wherein the production server (11) is further configured to add an additional person (O5) with an additional user terminal (41) to the team in that the additional user terminal (41) is registered by the production server.

9. System according to any of claims 1 to 8,
wherein the production server (11) is further configured to identify the persons (O3, O4, O5, ...) in the team using identifiers of the user terminals (41) assigned to them.

10. System according to any of claims 1 to 9,
wherein each of the tasks (T11, T12, ...) is assigned to a group and each task in a group is marked as incomplete, as active or as complete.

11. System according to claim 10,
wherein the production server (11) is further configured, when allocating people tasks, initially to take into account tasks in the group comprising most incomplete tasks and fewest active tasks.

12. System according to any of claims 1 to 11,
wherein the user terminals (41) are augmented reality (AR) terminals, which each have a stereoscopic heads-up display and one or more sensors which capture the geometry of the environment in three dimensions.

13. System according to claim 12,
wherein at least some of the AR terminals (41) and/or production servers (11) are configured to create from the sensor data, in an authoring mode, a 3D model of the environment which also includes the positions (P11, P12, ...) assigned to the tasks (T12, T22, ...).

14. System according to any of claims 1 to 13,
wherein the production server (11) is further configured initially to create, for a process to be handled by the team, a list (LI) of tasks required for performing the process,
wherein the process parameters of a previously performed process are taken into account in creating the list (LI).

15. System according to claim 14,
wherein the list (LI) of tasks is continuously dynamically adapted while taking into account the already completed tasks (T12, T22, ...) and the potentially changing number of persons (O3, O4, O5, ...) and their skill levels.

16. Computer-assisted method for supporting teamwork, comprising:
storing the following data on a production server (11): the three-dimensional geometry of at least one part of a machine in a production line and a plurality of tasks (T12, T22, ...), each task being assigned a position (P11, P12, ...) in space, at which the relevant task (T12, T22, ...) is to be performed, and positioned-based information regarding the completion of the task;
signing a plurality of user terminals (41), connected to the production server (11) via a computer network, in to the production server (11), each user terminal (41) being assigned to a person (O3, O4, O5, ...) in a team,
generating dynamically and adapting dynamically and in real time a task list (LI) for a process to be handled by the team, including allocating each person (O3, O4, O5, ...) in the team an individual task (T11, T12, ...) or a group of tasks from this list (LI), the position-based information (410) assigned to each task (T11, T12, ...) being displayed on the user terminal (41) of the relevant person (O3, O4, O5, ...) ,
wherein the tasks are allocated dynamically as a function of the number of persons (O3, O4, O5, ...) and as a function of process parameters of a previously performed process and are updated if the number of persons (O3, O4, O5, ...) changes,
wherein tasks which are logically and/or spatially dependent on one another are combined into groups and/or have to be processed consecutively, and
wherein the specified process includes setting up or retooling one or more machines in the production line.

17. Method according to claim 16,
wherein the user terminal (41) displays the position-based information (410) assigned to the relevant task (T11, T12, ...) in the position (P11, P12, ...) in space assigned to the task.

18. Method according to either claim 16 or claim 17,
wherein each user terminal (41) displays the task allocated to the person (O3, O4, O5) assigned to the user terminal (41) and, when the user has confirmed the task, displays the position-based information (410) assigned to the relevant task (T11, T12, ...) in the position (P11, P12, ...) in space assigned to the task.

19. Method according to any of claims 16 to 18, wherein allocating a task (T11, T12, ...) from the plurality of tasks comprises:
allocating a group of tasks (T11, T12, ...) from the plurality of tasks to one or more persons (O3, O4, O5, ...) in the team, the user terminal (41) of the person (O3, O4, O5, ...) making it possible to select a task from the group of tasks (T11, T12, ...); and
displaying the position-based information (410) assigned to the task (T11, T12, ...) selected by the person (O3, O4, O5, ...) on the user terminal (41) of the relevant person (O3, O4, O5, ...).

20. Method according to any of claims 16 to 19,
wherein the tasks (T11, T12, ...), the positions in space assigned to the tasks and the associated position-based information (410) are stored in a database of the production server (11).

## Revendications

1. Système assisté par ordinateur pour supporter le travail en équipe, comprenant :
un serveur de production (11) qui est configuré pour stocker : la géométrie tridimensionnelle d'au moins une partie d'une machine d'une ligne de production et une pluralité de tâches (T12, T22, ...), dans lequel à chaque tâche est affectée une position (P11, P22, ...) dans l'espace où la tâche (T12, T22, ...) respective doit être exécutée, ainsi qu'une information liée à la position concernant l'exécution de la tâche ;
une pluralité de terminaux d'utilisateur (41) qui sont connectés au serveur de production (11) par l'intermédiaire d'un réseau informatique, dans lequel chaque terminal d'utilisateur (41) est affecté à une personne (O3, O4, O5, ...) d'une équipe,
dans lequel le serveur de production (11) est en outre configuré pour générer dynamiquement ainsi que pour adapter en temps réel et dynamiquement une liste de tâches (L1) pour un processus à traiter par l'équipe, et ainsi affecter à chaque personne (O3, O4, O5, ...) de l'équipe une seule tâche (T11, T12, ...) ou un groupe de tâches de cette liste (L1), dans lequel l'information liée à la position (410) affectée à la tâche (T11, T12, ...) respective est affichée sur le terminal d'utilisateur (41) de la personne (O3, O4, O5, ...) concernée,
dans lequel l'affectation des tâches s'effectue dynamiquement en fonction du nombre de personnes (O3, O4, O5, ...) ainsi qu'en fonction de paramètres de processus d'un processus précédemment exécuté et est mise à jour lorsque le nombre de personnes (O3, O4, O5, ...) change,
dans lequel de telles tâches sont réunies en groupes qui dépendent logiquement et/ou spatialement les uns des autres et/ou qui doivent être exécutés séquentiellement, et
dans lequel le processus prédéfini comprend l'équipement ou le re-équipement d'une ou plusieurs machines de la ligne de production.

2. Système selon la revendication 1,
dans lequel le terminal d'utilisateur (41) est configuré pour afficher l'information liée à la position (410) dans l'espace affectée à la tâche (T11, T12, ...) respective, dans la position (P11, P12, ...) affectée à la tâche.

3. Système selon l'une des revendications 1 à 2,
dans lequel le serveur de production (11) est en outre configuré pour affecter à chaque personne une seule tâche ou un groupe de tâches, dans lequel un niveau de compétence de la personne respective est pris en compte lors de l'affectation.

4. Système selon l'une des revendications 1 à 3,
dans lequel le serveur de production (11) est en outre configuré pour marquer chaque personne (O5, ...) de l'équipe à laquelle une tâche (T41) a été affectée, comme étant occupée et pour marquer la tâche affectée comme étant active.

5. Système selon la revendication 4,
dans lequel le serveur de production (11) est en outre configuré pour marquer une tâche (T41) comme étant exécutée lorsque la personne (O5) à laquelle la tâche (T41) est affectée confirme l'exécution de la tâche (T41) via son terminal d'utilisateur (41).

6. Système selon la revendication 5,
dans lequel le serveur de production (11) est en outre configuré pour supprimer le marquage d'une tâche comme étant à nouveau active sans la marquer comme étant exécutée, lorsque le terminal d'utilisateur (41) de la personne (O5) à laquelle la tâche (T41) est affectée, est déconnecté du serveur de production (11) sans que la personne (O5) ait confirmé l'exécution de la tâche (T41).

7. Système selon la revendication 5 ou 6,
dans lequel le serveur de production (11) est en outre configuré pour affecter une nouvelle tâche parmi la pluralité de tâches à des personnes (O2, O4, ...) auxquelles aucune tâche n'est actuellement affectée, tant que la pluralité de tâches (T11, T12, ...) contient des tâches qui ne sont pas marquées comme étant actives ou exécutées.

8. Système selon l'une des revendications 1 à 7,
dans lequel le serveur de production (11) est en outre configuré pour ajouter à l'équipe une personne supplémentaire (O5) avec un terminal d'utilisateur supplémentaire (41), en enregistrant le terminal d'utilisateur supplémentaire (41) à partir du serveur de production.

9. Système selon l'une des revendications 1 à 8,
dans lequel le serveur de production (11) est en outre configuré pour identifier les personnes (O3, O4, O5, ...) de l'équipe au moyen d'un identifiant des terminaux d'utilisateur (41) affectés.

10. Système selon l'une des revendications 1 à 9,
dans lequel chacune des tâches (T11 , T12, ...) est affectée à un groupe et chaque tâche d'un groupe est marquée comme étant non exécutée, active ou exécutée.

11. Système selon la revendication 10,
dans lequel le serveur de production (11) est en outre configuré pour tenir d'abord compte des tâches dans le groupe qui comprend le plus de tâches non exécutées et le moins de tâches actives, lors de l'affectation de tâches à des personnes.

12. Système selon l'une des revendications 1 à 11,
dans lequel les terminaux d'utilisateur (41) sont des terminaux à réalité augmentée (AR) qui comprennent respectivement un affichage tête haute stéréoscopique ainsi qu'un ou plusieurs capteurs qui détectent la géométrie tridimensionnelle de l'environnement.

13. Système selon la revendication 12,
dans lequel au moins une partie des terminaux AR (41) et/ou le serveur de production (11) sont configurés pour produire un modèle 3D de l'environnement dans un mode de création à partir des données de capteur, lequel modèle 3D contient également les positions (P11, P12, ...) affectées aux tâches (T12, T22, ...).

14. Système selon l'une des revendications 1 à 13,
dans lequel le serveur de production (11) est en outre configuré pour créer initialement, pour un processus à traiter par l'équipe, une liste (L1) de tâches qui sont nécessaire pour l'exécution du processus,
dans lequel des paramètres de processus d'un processus précédemment exécuté sont pris en compte lors de la création de la liste (L1).

15. Système selon la revendication 14,
dans lequel la liste (L1) de tâches est adaptée dynamiquement en continu en tenant compte des tâches (T12, T22, ...) déjà exécutées et du nombre éventuellement variable de personnes (O3, O4, O5, ...) et de leur niveau de compétence.

16. Procédé assisté par ordinateur pour supporter le travail en équipe, comprenant :
stocker les données suivantes sur un serveur de production (11) : la géométrie tridimensionnelle d'au moins une partie d'une machine d'une ligne de production et une pluralité de tâches (T12, T22, ...), dans lequel à chaque tâche est affectée une position (P11, P12, ...) dans l'espace où la tâche (T12, T22, ...) respective doit être exécutée, ainsi qu'une information liée à la position concernant l'exécution de la tâche ;
connecter au serveur de production (11) une pluralité de terminaux d'utilisateur (41) qui sont connectés au serveur de production (11) par l'intermédiaire d'un réseau informatique, dans lequel une personne (O3, O4, O5, ...) d'une équipe est affectée à chaque terminal d'utilisateur (41) ,
générer dynamiquement et adapter en temps réel et dynamiquement une liste de tâches (L1) pour un processus à traiter par l'équipe, y compris affecter une seule tâche (T11, T12, ...) ou un groupe de tâches de cette liste (L1) à chaque personne (O3, O4, O5, ...) de l'équipe, dans lequel l'information liée à la position (410) affectée à la tâche (T11, T12,...) respective est affichée sur le terminal d'utilisateur (41) de la personne (O3, O4, O5, ...) concernée ;
dans lequel l'affectation des tâches s'effectue dynamiquement en fonction du nombre de personnes (O3, O4, O5, ...) ainsi qu'en fonction de paramètres de processus d'un processus précédemment exécuté et est mise à jour lorsque le nombre de personnes (O3, O4, O5, ...) change,
dans lequel de telles tâches sont réunies en groupes qui dépendent logiquement et/ou spatialement les uns des autres et/ou qui doivent être exécutés séquentiellement, et
dans lequel le processus prédéfini comprend l'équipement ou le re-équipement d'une ou plusieurs machines de la ligne de production.

17. Procédé selon la revendication 16,
dans lequel le terminal d'utilisateur (41) respectif affiche l'information liée à la position (410) affectée à la tâche (T11, T12, ...) respective, dans la position (P11, P12, ...) dans l'espace affectée à la tâche.

18. Procédé selon la revendication 16 ou 17,
dans lequel chaque terminal d'utilisateur (41) affiche la tâche qui est affectée à la personne (O3, O4, O5,...) associée au terminal d'utilisateur (41) et, lorsque l'utilisateur a confirmé la tâche, affiche l'information liée à la position (410) affectée à la tâche (T11, T12, ...) respective, dans la position (P11, P12, ...) dans l'espace associée à la tâche respective.

19. Procédé selon l'une des revendications 16 à 18, dans lequel l'affectation d'une tâche (T11, T12, ...) parmi la pluralité de tâches comprend de :
affecter un groupe de tâches (T11, T12, ...) parmi la pluralité de tâches à une ou plusieurs personnes (O3, O4, 05, ...) de l'équipe, dans lequel le terminal d'utilisateur (41) permet à la personne (O3, O4, O5, ...) de sélectionner une tâche dans le groupe de tâches (T11, T12, ...) ; et
afficher l'information liée à la position (410) qui est associée à la tâche (T11, T12, ...) sélectionnée par la personne (O3, O4, O5, ...), sur le terminal d'utilisateur (41) de la personne (O3, O4, O5, ...) concernée.

20. Procédé selon l'une des revendications 16 à 19,
dans lequel les tâches (T11, T12, ...), les positions dans l'espace affectées aux tâches et les informations associées liées à la position (410) sont stockées dans une base de données du serveur de production (11).
